# EUROPÄISCHE PATENTSCHRIFT

(11) **EP 2 697 081 B1**
(45) Veröffentlichungstag und Bekanntmachung des Hinweises auf die Patenterteilung: **22.04.2015**
(21) Anmeldenummer: 12709602.2
(22) Anmeldetag: 13.03.2012
(51) Int. Cl.: B60G 7/00, B60G 17/019, B62D 7/20, F16C 7/00, G01L 1/00, G07C 5/00, B66F 9/075

(54) **FAHRWERKBAUTEIL**
VEHICLE COMPONENT
ÉLÉMENT DE TRAIN DE ROULEMENT

(30) Priorität: 14.04.2011 DE 102011007390
(43) Veröffentlichungstag der Anmeldung: 19.02.2014
(73) Patentinhaber: ZF Friedrichshafen AG, 88038 Friedrichshafen (DE)
(72) Erfinder: GLEASON, John, South Lyon, Michigan 48178 (US); ADAMCZYK, Dirk, 49448 Lemförde (DE)
(86) Internationale Anmeldenummer: PCT/EP2012/054355
(87) Internationale Veröffentlichungsnummer: WO 2012/139844

(56) Entgegenhaltungen:
- EP-A1- 0 399 253
- EP-A1- 0 690 242
- WO-A1-01/44002
- DE-A1- 4 226 010
- DE-A1- 10 153 799
- FR-A1- 2 862 559
- JP-A- 7 089 311
- JP-A- 10 035 235
- JP-A- 11 028 920

## Beschreibung

Die Erfindung betrifft ein Fahrwerkbauteil mit wenigstens zwei Anbindungsstellen und einem sich zwischen den Anbindungsstellen erstreckenden und diese starr miteinander verbindenden Strukturteil, welches wenigstens einen Einsatz aus einem duktilen Material und wenigstens zwei die Anbindungsstellen tragende oder bildende Anbindungsbereiche umfasst, von denen zumindest einer aus Kunststoff besteht.

Die DE 101 53 799 A1 offenbart eine Kraftverbindungsstrebe eines Fahrwerks eines Personen- oder Nutzkraftwagens zur Verbindung zwischen einem Chassis und einem Radträger, mit einem länglichen Grundkörper und mindestens zwei endständigen Lageraufnahmen zur Ein- und Ausleitung von Kräften, wobei der Grundkörper einen Verbund mindestens einer flachen Metalleinlage und einer die Restkontur bildenden Kunststoffstruktur aufweist, welche durch zumindest teilweises Umspritzen der Metalleinlage gebildet ist. Zur besseren Verbindungswirkung zwischen Metall und Kunststoff sind in der Metalleinlage Aussparungen vorgesehen. Ferner kann die Metalleinlage vollständig von Kunststoff umgeben sein.

Diese Kraftverbindungsstrebe ermöglicht eine Gewichtsreduzierung gegenüber rein metallischen Kraftverbindungsstreben und stellt ferner sicher, dass eine Beschädigung des Kunststoffkörpers nicht zu einem Totalverlust der Funktionalität führt. Auch dient die Metalleinlage einer Strukturverstärkung in Bezug auf Lebensdauer und Knicklast. Dennoch verursacht die Metalleinlage einen nicht unerheblichen Anteil am Gesamtgewicht der Kraftverbindungsstrebe.

Ausgehend hiervon liegt der Erfindung die Aufgabe zugrunde, das Gewicht bei einem Fahrwerkbauteil der eingangs genannten Art weiter reduzieren zu können. Vorteilhaft sollen auch die Kosten des Fahrwerkbauteils verringert oder gering gehalten werden können.

Diese Aufgabe wird erfindungsgemäß mit einem Fahrwerkbauteil nach Anspruch 1 gelöst. Bevorzugte Weiterbildungen der Erfindung sind in den Unteransprüchen gegeben.

Das erfindungsgemäße Fahrwerkbauteil, insbesondere für ein Kraftfahrzeug, weist wenigstens zwei Anbindungsstellen und ein sich zwischen den Anbindungsstellen erstreckendes und diese starr miteinander verbindendes Strukturteil auf, welches wenigstens einen Einsatz aus einem duktilen Material (duktiler Einsatz) und wenigstens zwei die Anbindungsstellen tragende oder bildende Anbindungsbereiche umfasst, von denen jeder oder zumindest einer aus Kunststoff besteht, wobei das Strukturteil wenigstens einen die Anbindungsbereiche fest miteinander verbindenden und den Einsatz aufweisenden oder durch diesen gebildeten Zwischenbereich umfasst, der duktiler als jeder oder zumindest einer der Anbindungsbereiche ausgebildet ist und hinsichtlich einer mechanischen Überlastung des Strukturteils eine örtlich begrenzte Schwachstelle bildet.

Die Erfindung basiert auf dem Vorsehen einer "örtlich begrenzten Schwachstelle" in dem Strukturteil und somit auf einem anderen Ansatz als die DE 101 53 799 A1, wonach die Metalleinlage zur "Verstärkung" des Grundkörpers dient und sich folglich auch in allen dort gezeigten Ausführungsformen über die gesamte Länge desselben erstreckt. Insbesondere erfüllt das erfindungsgemäße Fahrwerkbauteil die Anforderungen an einen bestimmungsgerechten Einsatz im Fahrzeug auch ohne metallische Verstärkungseinlage in dem oder den aus Kunststoff bestehenden Anbindungsbereichen. Der zumindest eine oder die aus Kunststoff bestehenden Anbindungsbereiche des Strukturteils sind vorteilhaft derart dimensioniert, dass die im üblichen Betrieb des Fahrzeugs auftretenden Betriebskräfte und Momente ohne metallische Verstärkungseinlage übertragen werden können. Der Zwischenbereich und/oder der duktile Einsatz werden insbesondere schon dann verformt, wenn missbräuchliche mechanische Belastungen und/oder Momente auftreten (mechanische Überlastung), die noch nicht zu einer Zerstörung des zumindest einen oder der aus Kunststoff bestehenden Anbindungsbereiche führen. Somit kann der duktile Einsatz im Vergleich zur Metalleinlage gemäß der DE 101 53 799 A1 relativ kurz bzw. örtlich begrenzt ausgebildet sein. Bevorzugt erstreckt sich der duktile Einsatz lediglich über einen Teilbereich des Strukturteils, wobei die Länge des duktilen Einsatzes vorzugsweise kleiner oder wesentlich kleiner als die Gesamtlänge des Strukturteils ist. Hierdurch ist ein relativ geringes Gewicht des Fahrwerkbauteils erzielbar. Der zumindest eine oder die aus Kunststoff bestehenden Anbindungsbereiche des Strukturteils sind vorzugsweise frei oder weitgehend frei von dem duktilen Einsatz und/oder von einer anderen metallischen Verstärkungseinlage, sodass eine größere Freiheit bei der Gestaltung des Strukturteils besteht. Der Zwischenbereich ist insbesondere zwischen den Anbindungsbereichen angeordnet. Die Anbindungsbereiche bilden vorteilhaft Endbereiche des Strukturteils. Bei den Anbindungsstellen handelt es sich bevorzugt um endständige Anbindungsstellen des Fahrwerkbauteils.

Da der für den zumindest einen oder für die aus Kunststoff bestehenden Anbindungsbereiche eingesetzte Kunststoff insbesondere ein Sprödbruchverhalten oder Bruchverhalten ohne bleibende Verformung zeigt, würde eine mechanische Überlastung dieses oder dieser Anbindungsbereiche zu einem Bruch und somit zu einem vollständigen Funktionsausfall des Fahrwerkbauteils führen. Der Zwischenbereich ist insbesondere derart ausgebildet, dass der duktile Einsatz sich bei einer mechanischen Überlastung des Strukturteils verformt, bevor ein Bruch des zumindest einen oder der aus Kunststoff bestehenden Anbindungsbereiche erfolgen kann. Bevorzugt ist der Zwischenbereich und/oder Einsatz (mechanisch) nachgiebiger als der zumindest eine oder die aus Kunststoff bestehenden Anbindungsbereiche ausgebildet.

Der Einsatz ist insbesondere im Abstand zu den Anbindungsstellen angeordnet. Bevorzugt ist der Einsatz zwischen den Anbindungsstellen angeordnet. Vorzugsweise sind die Anbindungsbereiche im Abstand zu den Anbindungsstellen mit dem Zwischenbereich und/oder dem Einsatz verbunden.

In Sonderfällen, z.B. bei beengtem Bauraum und/oder geringer Größe des Fahrwerkbauteils, kann es von Vorteil sein, einen anderen der Anbindungsbereiche in den Zwischenbereich zu integrieren, sodass dieser Anbindungsbereich das duktile Material umfasst oder aus diesem besteht. Insbesondere bildet der Zwischenbereich den anderen Anbindungsbereich.

Bevorzugt ist wenigstens einer der oder sind die Anbindungsbereiche im Wesentlichen frei von dem duktilen Einsatz. Der Verbindungsbereich, in dem jeder der Anbindungsbereiche mit dem Zwischenbereich und/oder dem duktilen Einsatz verbunden ist, ist vorzugsweise wesentlich kleiner als der Restbereich des jeweiligen Anbindungsbereichs, insbesondere in einer durch die beiden Anbindungsstellen verlaufenden Richtung. Bevorzugt sind die Anbindungsbereiche auch frei oder im Wesentlichen frei von anderen duktilen und/oder metallischen Einlagen.

Das Strukturteil bildet z.B. eine Strebe. Insbesondere ist das Strukturteil länglich ausgebildet. Gemäß einer ersten Variante ist das Strukturteil gerade oder im Wesentlichen gerade. Gemäß einer zweiten Variante ist das Strukturteil gekrümmt.

Der Einsatz ist insbesondere gerade oder im Wesentlichen gerade. Bevorzugt ist der Einsatz länglich. Vorzugsweise erstrecken sich das Strukturteil und/oder der Einsatz in einer Längsrichtung.

Gemäß einer Weiterbildung der Erfindung ist das Strukturteil dreieckig, Y-förmig oder U-förmig ausgebildet. In diesem Fall bildet das Fahrwerkbauteil bevorzugt einen Dreipunktlenker. Beispielsweise bildet das Fahrwerkbauteil einen Dreieckslenker oder einen U-förmigen Lenker. Dreieckslenker werden insbesondere an der Vorderachse in der unteren Ebene eingesetzt. Häufige Anwendungen dafür sind McPherson-Achsen. U-förmige Lenker werden häufig in der oberen Ebene eingesetzt, z.B. bei Mehrlenker- oder Doppel-Querlenker-Achsen.

Der duktile Einsatz bildet z.B. eine Schwachstelle in Bezug auf in Längsrichtung des Strukturteils wirkende Druckbelastungen. Ergänzend oder alternativ kann der duktile Einsatz eine Schwachstelle in Bezug auf quer zur Längsrichtung des Strukturteils wirkende Belastungen bilden.

Eine mechanische Überlastung des Strukturteils führt bevorzugt zu einer plastischen Verformung des Zwischenbereichs. Ferner verformen sich die Anbindungsbereiche bei einer mechanischen Überlastung des Strukturteils vorzugsweise elastisch, insbesondere ausschließlich elastisch. Beispielsweise verformen sich die Anbindungsbereiche bei einer mechanischen Überlastung des Strukturteils ausschließlich elastisch, bis sich die Position der Anbindungsstellen, insbesondere die relative Position der Anbindungsstellen zueinander, aufgrund einer plastischen Verformung des Zwischenbereichs um ein vorgegebenes Maß bleibend verändert hat, welches gemäß einer praxisgerechten Ausgestaltung z.B. wenigstens 10mm beträgt. Vorteilhaft tritt bei einer mechanischen Überlastung des Strukturteils die plastische Verformung des Zwischenbereichs früher ein als eine Verformung der Anbindungsbereiche.

Gemäß einer Ausgestaltung der Erfindung kann die plastische Verformung des Zwischenbereichs zu einer relativen Positionsveränderung der Anbindungsstellen zueinander von mehr als 2mm führen, bevor eine bleibende Verformung, ein Riss oder ein Bruch an einer außerhalb des Zwischenbereichs liegenden Stelle des Strukturteils auftritt. Umfasst das Fahrwerkbauteil mehr als zwei Anbindungsstellen, erfolgt die vorgenannte Positionsveränderung vorzugsweise zumindest zwischen zwei der Anbindungsstellen, bevor eine bleibende Verformung, ein Riss oder ein Bruch an einer außerhalb des Zwischenbereichs liegenden Stelle des Strukturteils auftritt. Umfasst das Fahrwerkbauteil mehrere Zwischenbereiche, kann die plastische Verformung der Zwischenbereiche in Summe zumindest in einer Richtung zu einer Positionsveränderung der Anbindungsstellen zueinander von z.B. mehr als 2mm führen, bevor eine bleibende Verformung, ein Riss oder ein Bruch an einer außerhalb der Zwischenbereiche liegenden Stelle des Strukturteils auftritt.

Der duktile Einsatz bildet insbesondere ein separates Bauteil, welches optimal an seine Funktion als Schwachstelle angepasst ist. Somit ist es möglich, für den duktilen Einsatz plastische Verformungen und/oder Dehnungen von mehr als 5% zuzulassen. Es sind sogar Dehnungen von mehr als 10% oder von mehr als 50% für den duktilen Einsatz realisierbar, bevor dieser bricht. Nach einer mechanischen Überlastung des Strukturteils bleibt das Fahrwerkbauteil somit beschränkt funktionsfähig. Ferner verändert das Fahrwerkbauteil aufgrund seiner starken Verformung das Fahrverhalten des Fahrzeugs spürbar, sodass der Fahrer die Beschädigung des Fahrwerkbauteils bemerken kann.

Gemäß einer Ausgestaltung der Erfindung ist der Einsatz zumindest an einem seiner Enden mit dem Kunststoff des zumindest einen aus Kunststoff bestehenden Anbindungsbereichs umspritzt. Bevorzugt ist der Einsatz aber zumindest im Bereich seiner Enden mit dem Kunststoff der aus Kunststoff bestehenden Anbindungsbereiche umspritzt. Insbesondere handelt es sich bei diesen Enden um axiale Enden des Einsatzes. Liegt der Einsatz teilweise frei, so ist er bevorzugt mit einem Korrosionsschutz versehen. Ferner kann der Einsatz vollständig mit dem Kunststoff umspritzt sein. In diesem Fall bildet der Zwischenbereich zusammen mit dem zumindest einen oder den aus Kunststoff bestehenden Anbindungsbereichen einen einheitlichen Kunststoffkörper, in den der duktile Einsatz im Zwischenbereich eingebettet ist. Dabei kann der Kunststoff als Korrosionsschutz des duktilen Einsatzes dienen, sodass ein zusätzlicher Korrosionsschutz nicht erforderlich ist.

Gemäß einer Ausgestaltung der Erfindung ist der duktile Einsatz formschlüssig mit den Anbindungsbereichen oder mit wenigstens einem der Anbindungsbereiche verbunden, der z.B. durch den zumindest einen aus Kunststoff bestehenden Anbindungsbereich gebildet ist. Beispielsweise umfassen der duktile Einsatz und/oder die oder der wenigstens eine Anbindungsbereich Geometrien, die einen Hinterschnitt bilden, sodass der Formschluss durch einen oder mehrere Hinterschnitte erzielt wird. Insbesondere sind in dem duktilen Einsatz ein oder mehrere durchgehende Löcher vorgesehen, die von dem Kunststoffmaterial des zumindest einen oder der aus Kunststoff bestehenden Anbindungsbereiche durchsetzt sind.

Bei einer formschlüssigen Verbindung des duktilen Einsatzes mit den Anbindungsbereichen ist es vorteilhaft, dass die Schwachstellen außerhalb des formschlüssigen Verbindungsbereichs liegen, sodass eine Verformung des duktilen Einsatzes keinen oder einen lediglich geringen negativen Einfluss auf die Haltbarkeit dieser formschlüssigen Verbindung hat. Bevorzugt ist die Schwachstelle daher nicht im Bereich des Formschlusses vorgesehen.

Die Umfangskontur des duktilen Einsatzes kann kreisförmig sein. Bevorzugt weicht die Umfangskontur des duktilen Einsatzes aber von der Kreisform ab. Somit können allein aufgrund der Geometrie des Einsatzes die Anbindungsbereiche durch Formschluss drehstarr miteinander verbunden werden. Der duktile Einsatz kann z.B. durch ein geschlossenes oder offenes Hohlprofil gebildet sein. Bevorzugt ist der duktile Einsatz durch ein U-Profil gebildet, welches besonders kostengünstig beschaffbar ist.

Der duktile Einsatz kann einteilig ausgebildet sein. Gemäß einer Weiterbildung der Erfindung ist der duktile Einsatz mehrteilig ausgebildet. Als Teile des Einsatzes können z.B. reine Stanzteile verwendet werden, die besonders kostengünstig beschaffbar sind. Ferner kann in diesem Fall ein eingespritzter Kunststoff als Abstandhalter zwischen den Teilen des duktilen Einsatzes dienen, beispielsweise um die Knicklast zu erhöhen.

Der duktile Einsatz besteht bevorzugst aus Metall. Insbesondere besteht der duktile Einsatz aus Stahl oder aus Aluminium. Viele Metalle sind als duktiles Material hervorragend geeignet.

Der Kunststoff, aus dem der zumindest eine oder die aus Kunststoff bestehenden Anbindungsbereiche bestehen, ist bevorzugt mit Fasern versetzt. Diese Fasern dienen insbesondere der Verstärkung des Kunststoffes und können somit auch als Verstärkungsfasern bezeichnet werden. Beispielsweise ist der Kunststoff mit Endlosfasern versetzt. Als Fasern können z.B. Glasfasern und/oder Kohlefasern verwendet werden. Insbesondere handelt es sich bei dem Kunststoff um ein Thermoplast oder ein Duroplast. Vorteilhaft besteht der Kunststoff aus einem Polyamid oder aus einem Epoxidharz.

Der zumindest eine oder die aus Kunststoff bestehenden Anbindungsbereiche werden insbesondere im Spritzgussverfahren hergestellt. Bevorzugt wird der duktile Einsatz während des Herstellens des zumindest einen oder der aus Kunststoff bestehenden Anbindungsbereiche mit dem Kunststoffmaterial umspritzt. Jeder der Anbindungsbereiche kann separat hergestellt werden. Bevorzugt werden die Anbindungsbereiche aber in einem gemeinsamen Spritzgussvorgang hergestellt.

Die Anbindungsstellen sind insbesondere an den dem duktilen Einsatz abgewandten Enden der Anbindungsbereiche vorgesehen. Bevorzugt bilden die Anbindungsstellen freie Enden der Anbindungsbereiche. Vorzugsweise ist jede der Anbindungsstellen einstückig mit dem jeweiligen Anbindungsbereich ausgebildet. Insbesondere ist jede der Anbindungsstellen materialhomogen mit dem jeweiligen Anbindungsbereich ausgebildet. Somit kann jede der Anbindungsstellen zusammen mit dem jeweiligen Anbindungsbereich hergestellt werden. Insbesondere können die Anbindungsstellen zusammen mit den Anbindungsbereichen in einem Spritzgussvorgang hergestellt werden. Es ist aber auch möglich, die Anbindungsstellen separat zu fertigen und anschließend mit den Anbindungsbereichen zu verbinden.

Gemäß einer Ausgestaltung der Erfindung ist in wenigstens einer oder jeder der Anbindungsstellen eine Ausnehmung vorgesehen, die insbesondere kreisförmig und vorzugsweise durchgehend ist. Beispielsweise kann wenigstens eine oder jede der Anbindungsstellen einen Ring, einen Hohlzylinder oder einen Topf bilden. Insbesondere ist jede der Anbindungsstellen ringförmig oder zylinderförmig ausgebildet. Bevorzugt ist von wenigstes einer oder von jeder der Anbindungsstellen ein Gelenk aufgenommen oder gebildet, welches z.B. als Kugelgelenk oder Gummilager ausgebildet ist. Insbesondere umfasst oder bildet jede oder wenigstens eine der Anbindungsstellen eine Gelenkaufnahme.

Das Fahrwerkbauteil ist bevorzugt mit einer oder mehreren der Anbindungsstellen, insbesondere unter Zwischenschaltung des oder der jeweils zugehörigen Gelenke, mit einem oder mehreren anderen Fahrwerkbauteilen verbunden. Vorteilhaft ist das Fahrwerkbauteil mit einer oder mehreren anderen der Anbindungsstellen, insbesondere unter Zwischenschaltung des oder der jeweils zugehörigen Gelenke, mit einem Fahrzeugaufbau des Kraftfahrzeugs verbunden.

Gemäß einer Weiterbildung der Erfindung ist eine Erfassungsvorrichtung vorgesehen, mittels welcher eine mechanische Überlastung des Strukturteils erfassbar ist. Die Erfassungsvorrichtung umfasst bevorzugt eine oder wenigstens eine elektrische Leitung, die z.B. entlang des duktilen Einsatzes geführt ist. Die elektrische Leitung ist vorteilhaft in den Kunststoff eingebettet und somit vor Steinschlag und anderen Umwelteinflüssen geschützt. Ferner ist die elektrische Leitung mit einer Auswerteeinrichtung der Erfassungsvorrichtung verbunden. Wird der duktile Einsatz aufgrund einer mechanischen Überlastung verformt, so reißt die elektrische Leitung oder wird verformt, was von der Auswerteeinrichtung erfassbar ist. Eine erfasste mechanische Überlastung des Strukturteils wird mittels der Erfassungsvorrichtung vorzugsweise einer oder mehreren anderen Vorrichtungen und/oder dem Fahrer signalisiert.

Ergänzend oder alternativ kann die Erfassungsvorrichtung eine mechanische Überlastung des Strukturteils durch eine auf eine Verformung des duktilen Einsatzes zurückzuführende Veränderung von elektrischen Eigenschaften des duktilen Einsatzes selbst erfassen, insbesondere wenn dieser aus Metall besteht. Mittels der Erfassungsvorrichtung ist somit bevorzugt wenigstens eine elektrische Eigenschaft des Einsatzes erfassbar, die sich bei einer Verformung des Einsatzes ändert. Insbesondere ist Erfassungsvorrichtung elektrisch mit dem Einsatz verbunden.

Ergänzend oder alternativ können die in den Kunststoff eingebetteten Fasern zur Erfassung einer mechanischen Überlastung des Strukturteils verwendet werden, beispielsweise durch Nutzung der optischen Eigenschaften der Fasern (z.B. bei Glasfasern) und/oder der elektrischen Eigenschaften der Fasern (z.B. bei Kohlefasern). Die Erfassungsvorrichtung umfasst bevorzugt in den Kunststoff eingebettete Fasern, deren optische und/oder elektrische. Eigenschaften sich bei einer mechanischen Belastung, insbesondere bei einer mechanischen Überlastung, des Strukturteils ändern. Die zur Erfassung einer mechanischen Überlastung des Strukturteils verwendeten Fasern sind vorzugsweise Endlosfasern.

Bei einer mehrteiligen Ausführung des duktilen Einsatzes sind dessen Teile vorteilhaft elektrisch voneinander isoliert. Bevorzugt sind die Teile des duktilen Einsatzes elektrisch leitend ausgebildet. Insbesondere sind die Teile des duktilen Einsatzes elektrisch mit der Erfassungsvorrichtung verbunden. Beispielsweise kann die Erfassung einer mechanischen Überlastung des Strukturteils dadurch erfolgen, dass die elektrische Kapazität zwischen den Teilen des duktilen Einsatzes gemessen wird. Durch eine Verformung des duktilen Einsatzes erfolgt eine Änderung des Abstands zwischen den Teilen und somit auch eine Änderung der Kapazität, was bevorzugt mittels der Erfassungsvorrichtung erfassbar ist, die in diesem Fall insbesondere eine Kapazitätsmesseinrichtung umfasst. Ferner kann die Erfassung einer mechanischen Überlastung des Strukturteils dadurch erfolgen, dass die Teile des Einsatzes auf einen elektrischen Kontakt hin überwacht werden. Durch eine Verformung des duktilen Einsatzes können dessen Teile elektrisch miteinander in Kontakt treten, was bevorzugt mittels der Erfassungsvorrichtung erfassbar ist, die in diesem Fall insbesondere eine Strommesseinrichtung oder einen Widerstandsmesser umfasst.

Gemäß einer Weiterbildung der Erfindung umfasst das Strukturteil zwei, wenigstens zwei oder mehr als zwei Einsätze aus duktilem Material, die in Bezug auf eine mechanische Überlastung des Strukturteils Schwachstellen in unterschiedlichen Belastungsrichtungen bilden. Diese Weiterbildung ist vorteilhaft bei einer dreieckigen, Y-förmigen oder U-förmigen Ausführung des Strukturteils vorgesehen. Die unterschiedlichen Belastungsrichtungen sind z.B. die Fahrzeuglängsrichtung und die Fahrzeugquerrichtung.

Die Anzahl der Anbindungsbereiche ist bevorzugt gleich der Anzahl der Anbindungsstellen. Ferner ist die Anzahl der Zwischenbereiche bevorzugt kleiner oder gleich der Anzahl der Anbindungsstellen abzüglich eins. Auch ist die Anzahl der duktilen Einsätze bevorzugt kleiner oder gleich der Anzahl der Anbindungsstellen abzüglich eins, wobei zu berücksichtigen ist, dass jeder der duktilen Einsätze ein- oder mehrteilig ausgebildet sein kann.

Gemäß einer Ausgestaltung der Erfindung weist das erfindungsgemäße Fahrwerkbauteil wenigstens drei Anbindungsstellen auf, wobei das Strukturteil wenigstens zwei Einsätze aus duktilem Material (duktile Einsätze) und wenigstens drei die Anbindungsstellen tragende oder bildende Anbindungsbereiche umfasst, von denen mehrere, jeder oder zumindest einer aus Kunststoff besteht. Ferner umfasst das Strukturteil wenigstens zwei Zwischenbereiche, wobei die Anbindungsbereiche paarweise über jeweils einen der Zwischenbereiche fest miteinander verbunden sind. Jeder der Zwischenbereiche weist einen oder wenigstens einen der Einsätze auf und ist duktiler als jeder oder zumindest einer der mit ihm verbundenen Anbindungsbereiche ausgebildet, sodass jeder der Zwischenbereiche hinsichtlich einer mechanischen Überlastung des Strukturteils eine örtlich begrenzte Schwachstelle bildet. Gemäß dieser Ausgestaltung ist das Strukturteil z.B. dreieckig, Y-förmig oder U-förmig ausgebildet.

Das Fahrwerkbauteil bildet zum Beispiel eine Spurstange oder einen Radlenker. Insbesondere bildet das Fahrwerkbauteil einen Querlenker. Gemäß einer ersten Alternative ist das Fahrwerkbauteil als Zweipunktlenker ausgebildet und umfasst zwei Anbindungsstellen. Gemäß einer zweiten Alternative ist das Fahrwerkbauteil als Dreipunktlenker ausgebildet und umfasst drei Anbindungsstellen.

Die Erfindung wird nachfolgend anhand bevorzugter Ausführungsformen unter Bezugnahme auf die Zeichnung beschrieben. In der Zeichnung zeigen:
- Fig. 1: eine schematische Seitenansicht eines Fahrwerkbauteils gemäß einer ersten Ausführungsform der Erfindung,
- Fig. 2: einen Schnitt durch das Fahrwerkbauteil entlang der aus Fig. 1 ersichtlichen Schnittlinie A-A,
- Fig. 3: einen Schnitt durch das Fahrwerkbauteil entlang der aus Fig. 1 ersichtlichen Schnittlinie B-B,
- Fig. 4: eine schematische Draufsicht auf das Fahrwerkbauteil gemäß der ersten Ausführungsform mit eingesetzten Gelenken,
- Fig. 5: eine schematische Draufsicht auf ein Fahrwerkbauteil gemäß einer zweiten Ausführungsform der Erfindung,
- Fig. 6: einen Schnitt durch das Fahrwerkbauteil gemäß der zweiten Ausführungsform entlang der aus Fig. 5 ersichtlichen Schnittlinie C-C, wobei neun unterschiedliche Varianten a) bis i) für den duktilen Einsatz gezeigt sind, und
- Fig. 7: eine schematische Draufsicht auf ein Fahrwerkbauteil gemäß einer dritten Ausführungsform der Erfindung.

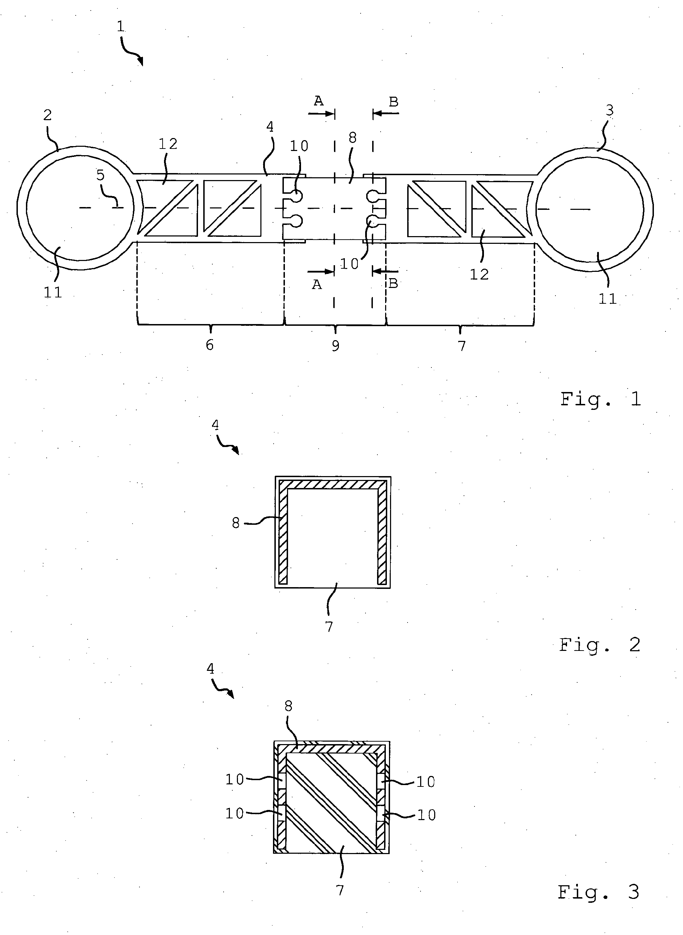

Aus den Figuren 1 bis 3 sind unterschiedliche Ansichten eines Fahrwerkbauteils 1 gemäß einer ersten Ausführungsform der Erfindung ersichtlich, wobei zwei Anbindungsstellen 2 und 3, die jeweils eine Gelenkaufnahme bilden, mittels eines als Strebe ausgebildeten Strukturteils 4 starr miteinander verbunden sind. Dem länglich ausgebildeten Strukturteil 4 ist eine Längsmittelachse 5 zugeordnet, wobei das Strukturteil 4 entlang seiner Längsmittelachse 5 in drei Bereiche unterteilt ist. Ein Anbindungsbereich 6 des Strukturteils 4 ist einstückig mit der Anbindungsstelle 2 ausgebildet, die ein freies Ende des Anbindungsbereichs 6 bildet. Ferner ist ein Anbindungsbereich 7 des Strukturteils 4 einstückig mit der Anbindungsstelle 3 ausgebildet, die ein freies Ende des Anbindungsbereichs 7 bildet. Die Anbindungsbereiche 6 und 7 bilden somit Endbereiche des Strukturteils 4. Im Abstand zu den Anbindungsstellen 2 und 3 sind die Anbindungsbereiche 6 und 7 mittels eines Einsatzes 8 fest miteinander verbunden, der einen Zwischenbereich 9 des Strukturteils 4 definiert.

Der Einsatz 8 ist durch ein U-Profil gebildet und an seinen axialen Enden jeweils mit durchgehenden Löchern 10 versehen. Ferner besteht der Einsatz 8 aus einem duktilen Material, insbesondere aus Metall. Die Anbindungsbereiche 6 und 7 bestehen aus Kunststoff, wobei die axialen Enden des Einsatzes 8 mit dem Kunststoff der Anbindungsbereiche 6 und 7 umspritzt sind, sodass sich der Kunststoff durch die durchgehenden Löcher 10 hindurch erstreckt. Die Anbindungsbereiche 6 und 7 sind somit mittels des Einsatzes 8 sowohl hinsichtlich einer Verschiebung in Richtung der Längsmittelachse 5 als auch hinsichtlich einer Verdrehung um diese Achse formschlüssig miteinander verbunden.

Die Anbindungsstelle 2 besteht aus demselben Kunststoff wie der Anbindungsbereich 6 und ist zusammen mit diesem in einem Spritzgussvorgang hergestellt, bei dem auch gleichzeitig der Einsatz 8 von dem Kunststoff des Anbindungsbereichs 6 umspritzt worden ist. Ferner besteht die Anbindungsstelle 3 aus demselben Kunststoff wie der Anbindungsbereich 7 und ist zusammen mit diesem in einem Spritzgussvorgang hergestellt, bei dem auch gleichzeitig der Einsatz 8 von dem Kunststoff des Anbindungsbereichs 7 umspritzt worden ist.

Jede Anbindungsstelle 2, 3 umfasst eine als durchgehendes Loch ausgebildete Ausnehmung 11, die kreisförmig ausgebildet ist. In jede dieser Ausnehmungen 11 wird ein Gelenk, z.B. in Form eines Kugelgelenks oder eines Gummilagers, eingesetzt, wonach das Fahrwerkbauteil 1 mittels der Gelenke in das Fahrzeug eingebaut wird. Ferner sind in den Anbindungsbereichen 6 und 7 Ausnehmungen 12 vorgesehen, die zur Gewichtsreduzierung der Strebe 4 dienen.

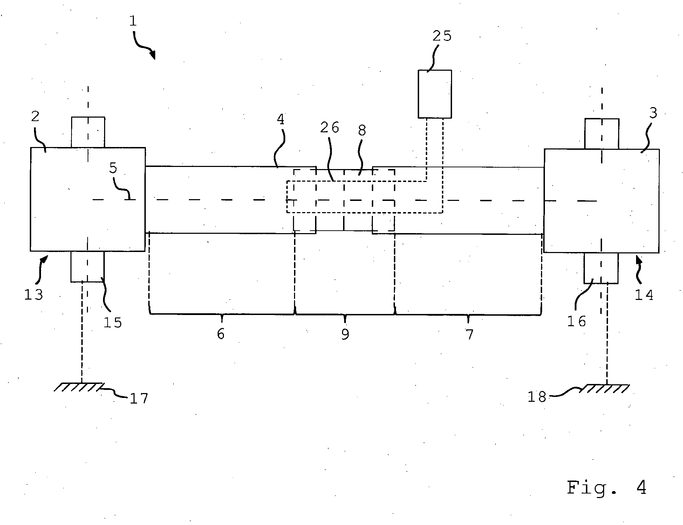

Aus Fig. 4 ist eine schematische Draufsicht auf das Fahrwerkbauteil 1 mit eingesetzten Gelenken 13 und 14 ersichtlich, die hier als Gummilager ausgebildet sind. Die Gelenkinnenteile 15 und 16 der Gelenke 13 und 14 sind an schematisch angedeuteten Fahrzeugbauteilen 17 und 18 befestigt, wobei das Fahrzeugbauteil 17 z.B. einen Radträger und das Fahrzeugbauteil 18 z.B. einen Fahrzeugaufbau oder Hilfsrahmen bildet.

Schematisch ist in Fig. 4 ferner eine Erfassungsvorrichtung 25 dargestellt, die eine elektrische Leistung 26 umfasst, die entlang des Einsatzes 8 in Form einer geschlossenen Leiterschleife verläuft und in dem Kunststoffmaterial der Anbindungsbereiche fixiert ist. Wird der Einsatz 8 verformt, reißt die elektrische Leistung 26, was mittels der Erfassungsvorrichtung 25 erfassbar ist.

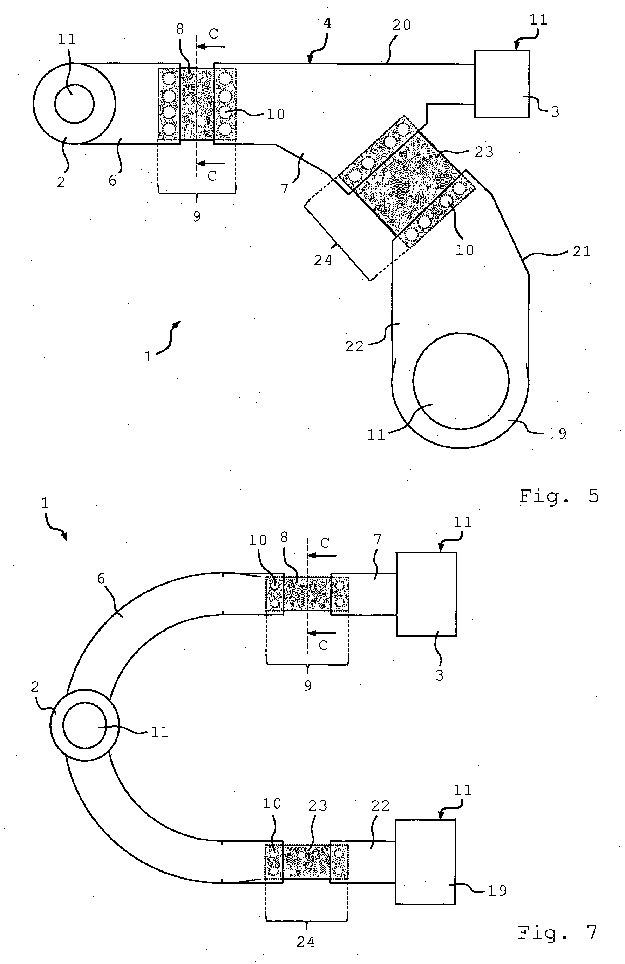

Aus Fig. 5 ist eine schematische Draufsicht auf ein Fahrwerkbauteil 1 gemäß einer zweiten Ausführungsform der Erfindung ersichtlich, wobei zu der ersten Ausführungsform identische oder ähnliche Merkmale mit denselben Bezugszeichen wie bei der ersten Ausführungsform bezeichnet sind. Im Unterschied zur ersten Ausführungsform ist das Fahrwerkbauteil 1 als Dreipunktlenker ausgebildet und umfasst drei Anbindungsstellen 2, 3 und 19, die auf den Ecken eines Dreiecks liegen und jeweils eine Gelenkaufnahme bilden. Die Anbindungsstellen 2, 3 und 19 sind mittels eines Strukturteils 4 starr miteinander verbunden, welches zwei schräg zueinander verlaufende Schenkel 20 und 21 aufweist und in fünf Bereiche unterteilt ist. Ein Anbindungsbereich 6 des Strukturteils 4 ist einstückig mit der Anbindungsstelle 2 ausgebildet, die ein freies Ende des Anbindungsbereichs 6 bildet. Ferner ist ein Anbindungsbereich 7 des Strukturteils 4 einstückig mit der Anbindungsstelle 3 ausgebildet, die ein freies Ende des Anbindungsbereichs 7 bildet. Zusätzlich ist ein Anbindungsbereich 22 des Strukturteils 4 einstückig mit der Anbindungsstelle 19 ausgebildet, die ein freies Ende des Anbindungsbereichs 22 bildet. Die Anbindungsbereiche 6, 7 und 22 bilden somit Endbereiche des Strukturteils 4. Im Abstand zu den Anbindungsstellen 2 und 3 sind die Anbindungsbereiche 6 und 7 mittels eines Einsatzes 8 fest miteinander verbunden, der einen Zwischenbereich 9 des Strukturteils 4 definiert. Ferner sind im Abstand zu den Anbindungsstellen 3 und 19 die Anbindungsbereiche 7 und 22 mittels eines Einsatzes 23 fest miteinander verbunden, der einen Zwischenbereich 24 des Strukturteils 4 definiert.

Der Schenkel 20 umfasst die Anbindungsbereiche 6 und 7 sowie den Zwischenbereich 9, und der Schenkel 21 umfasst die Anbindungsbereiche 7 und 22 sowie den Zwischenbereich 24. Da die Einsätze 8 und 23, wie die Schenkel 20 und 21, schräg zueinander verlaufen, sind die Zwischenbereiche 9 und 24 für Belastungen aus unterschiedlichen Richtungen ausgelegt.

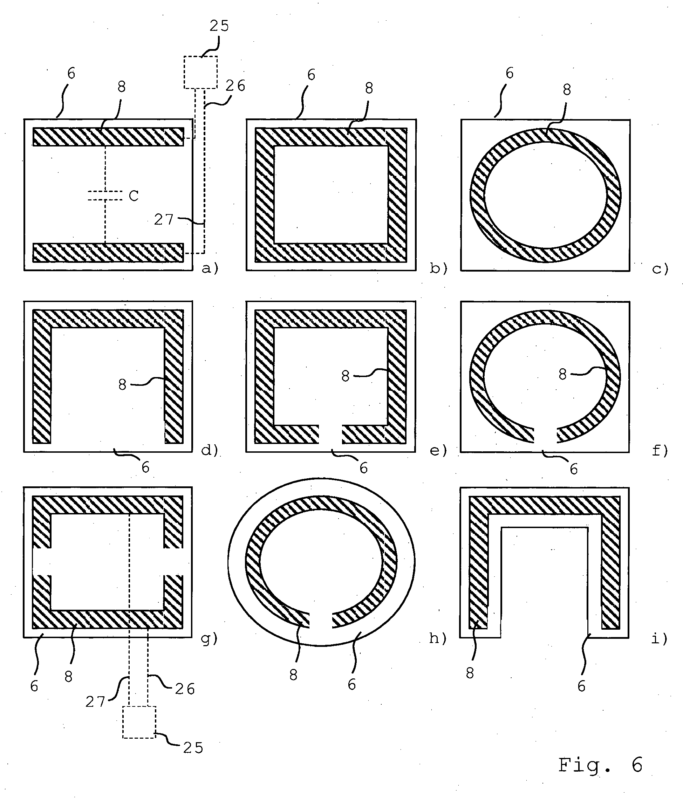

Der Einsatz 8 ist durch eines der aus Fig. 6 ersichtlichen Profile a) bis i) gebildet und an seinen Enden jeweils mit durchgehenden Löchern 10 versehen. Ferner besteht der Einsatz 8 aus einem duktilen Material, insbesondere aus Metall. Die Anbindungsbereiche 6 und 7 bestehen aus Kunststoff, wobei die Enden des Einsatzes 8 mit dem Kunststoff der Anbindungsbereiche 6 und 7 umspritzt sind, sodass sich der Kunststoff durch die durchgehenden Löcher 10 hindurch erstreckt. Die Anbindungsbereiche 6 und 7 sind somit mittels des Einsatzes 8 formschlüssig miteinander verbunden.

Der Einsatz 23 ist ebenfalls durch eines der aus Fig. 6 ersichtlichen Profile a) bis i) gebildet und an seinen Enden jeweils mit durchgehenden Löchern 10 versehen. Ferner besteht der Einsatz 23 aus einem duktilen Material, insbesondere aus Metall. Die Anbindungsbereiche 7 und 22 bestehen aus Kunststoff, wobei die Enden des Einsatzes 23 mit dem Kunststoff der Anbindungsbereiche 7 und 22 umspritzt sind, sodass sich der Kunststoff durch die durchgehenden Löcher 10 hindurch erstreckt. Die Anbindungsbereiche 7 und 22 sind somit mittels des Einsatzes 23 formschlüssig miteinander verbunden.

Die Anbindungsstelle 2 besteht aus demselben Kunststoff wie der Anbindungsbereich 6 und ist zusammen mit diesem in einem Spritzgussvorgang hergestellt, bei dem auch gleichzeitig der Einsatz 8 von dem Kunststoff des Anbindungsbereichs 6 umspritzt worden ist. Ferner besteht die Anbindungsstelle 3 aus demselben Kunststoff wie der Anbindungsbereich 7 und ist zusammen mit diesem in einem Spritzgussvorgang hergestellt, bei dem auch gleichzeitig die Einsätze 8 und 23 von dem Kunststoff des Anbindungsbereichs 7 umspritzt worden sind. Zusätzlich besteht die Anbindungsstelle 19 aus demselben Kunststoff wie der Anbindungsbereich 22 und ist zusammen mit diesem in einem Spritzgussvorgang hergestellt, bei dem auch gleichzeitig der Einsatz 23 von dem Kunststoff des Anbindungsbereichs 22 umspritzt worden ist.

Jede Anbindungsstelle 2, 3, 19 umfasst eine als durchgehendes Loch ausgebildete Ausnehmung 11, die kreisförmig ausgebildet ist. In jede dieser Ausnehmungen 11 wird ein Gelenk, z.B. in Form eines Kugelgelenks oder eines Gummilagers, eingesetzt, wonach das Fahrwerkbauteil 1 mittels der Gelenke in das Fahrzeug eingebaut wird. Gemäß der zweiten Ausführungsform verläuft die Ausnehmung 11 der Anbindungsstelle 3 quer zu den Ausnehmungen 11 der Anbindungsstellen 2 und 19.

Fig. 6 zeigt einen Schnitt durch den Einsatz 8 entlang der aus Fig. 5 ersichtlichen Schnittlinie C-C, wobei neun unterschiedliche Varianten a) bis i) für den duktilen Einsatz 8 gezeigt sind. Jede dieser Varianten kann für die Einsätze 8 und 23 gewählt werden. Auch können für die Einsätze 8 und 23 unterschiedliche Varianten gewählt werden.

Die Variante a) zeigt eine zweiteilige Ausführung des Einsatzes 8, dessen Teile jeweils über elektrische Leitungen 26 und 27 mit einer Erfassungsvorrichtung 25 verbunden sind. Verformt sich der Einsatz 8, so ändert sich der Abstand zwischen den beiden Teilen, was mit einer Änderung der elektrischen Kapazität des durch die beiden Teile gebildeten Kondensators verbunden ist, der schematisch durch ein Kondensatorsymbol C symbolisiert wird. Die Kapazitätsänderung ist mittels der Erfassungsvorrichtung 25 messbar, die somit eine Verformung des Einsatzes 8 erfassen kann.

Die Variante g) zeigt ebenfalls eine zweiteilige Ausführung des Einsatzes 8, dessen Teile jeweils über elektrische Leitungen 26 und 27 mit einer Erfassungsvorrichtung 25 verbunden sind. Verformt sich der Einsatz 8, ändert sich der Abstand zwischen den beiden Teilen, sodass diese elektrisch miteinander in Kontakt treten können, was mittels der Erfassungsvorrichtung 25 messbar ist, die somit eine Verformung des Einsatzes 8 erfassen kann.

Selbstverständlich ist es möglich, auch eine Verformung des Einsatzes 23 mit der oder mit einer anderen Erfassungsvorrichtung zu überwachen.

Aus Fig. 7 ist eine schematische Draufsicht auf ein Fahrwerkbauteil 1 gemäß einer dritten Ausführungsform der Erfindung ersichtlich, wobei zu den vorhergehenden Ausführungsformen identische oder ähnliche Merkmale mit denselben Bezugszeichen wie bei den vorhergehenden Ausführungsformen bezeichnet sind. Die dritte Ausführungsform bildet einen Dreipunktlenker und ist ähnlich wie die zweite Ausführungsform aufgebaut. Im Unterschied zur zweiten Ausführungsform weist das Strukturteil 4 allerdings eine U-Form auf, wobei die Einsätze 8 und 23 parallel zueinander verlaufen. Ferner verlaufen gemäß der dritten Ausführungsform die Ausnehmungen 11 der Anbindungsstellen 3 und 19 quer zu der Ausnehmung 11 der Anbindungsstelle 2. Zur weiteren Beschreibung der dritten Ausführungsform wird auf die Beschreibung der zweiten Ausführungsform verwiesen.

### Bezugszeichenliste

- 1: Fahrwerkbauteil
- 2: Anbindungsstelle
- 3: Anbindungsstelle
- 4: Strukturteil
- 5: Längsmittelachse des Strukturteils
- 6: Anbindungsbereich der Strukturteils
- 7: Anbindungsbereich der Strukturteils
- 8: duktiler Einsatz
- 9: Zwischenbereich des Strukturteils
- 10: durchgehendes Loch im Einsatz
- 11: Ausnehmung in der Anbindungsstelle
- 12: Ausnehmung im Anbindungsbereich
- 13: Gelenk
- 14: Gelenk
- 15: Gelenkinnenteil
- 16: Gelenkinnenteil
- 17: Fahrzeugbauteil
- 18: Fahrzeugbauteil
- 19: Anbindungsstelle
- 20: Schenkel des Strukturteils
- 21: Schenkel des Strukturteils
- 22: Anbindungsbereich der Strukturteils
- 23: duktiler Einsatz
- 24: Zwischenbereich des Strukturteils
- 25: Erfassungsvorrichtung
- 26: elektrische Leitung
- 27: elektrische Leitung

## Patentansprüche

1. Fahrwerkbauteil mit
wenigstens zwei Anbindungsstellen (2, 3),
einem sich zwischen den Anbindungsstellen (2, 3) erstreckenden und diese starr miteinander verbindenden Strukturteil (4), welches wenigstens einen Einsatz (8) aus einem duktilen Material und wenigstens zwei die Anbindungsstellen (2, 3) tragende oder bildende Anbindungsbereiche (6, 7) umfasst, von denen zumindest einer aus Kunststoff besteht,
**dadurch gekennzeichnet, dass**
das Strukturteil (4) wenigstens einen die Anbindungsbereiche (6, 7) fest miteinander verbindenden und den Einsatz (8) aufweisenden oder durch diesen gebildeten Zwischenbereich (9) umfasst, der duktiler als zumindest einer der Anbindungsbereiche (6, 7) ausgebildet ist und hinsichtlich einer mechanischen Überlastung des Strukturteils (4) eine örtlich begrenzte Schwachstelle bildet.

2. Fährwerkbauteil nach Anspruch 1,
**dadurch gekennzeichnet, dass**
eine mechanische Überlastung des Strukturteil (4) zu einer plastischen Verformung des Zwischenbereichs (9) führt.

3. Fahrwerkbauteil nach Anspruch 1 oder 2,
**dadurch gekennzeichnet, dass**
die Anbindungsbereiche (6, 7) sich bei einer mechanischen Überlastung des Strukturteil (4) elastisch verformen, insbesondere sich ausschließlich elastisch verformen, bis sich die Position der Anbindungsstellen (2, 3) relativ zueinander aufgrund einer plastischen Verformung des Zwischenbereichs (9) um ein vorgegebenes Maß bleibend verändert hat.

4. Fahrwerkbauteil nach einem der vorangehenden Ansprüche,
**dadurch gekennzeichnet, dass**
der Einsatz (8) zumindest an einem seiner Enden mit dem Kunststoff des zumindest einen aus Kunststoff bestehenden Anbindungsbereichs (6, 7) umspritzt ist.

5. Fahrwerkbauteil nach einem der vorangehenden Ansprüche, **dadurch gekennzeichnet, dass**
der Einsatz (8) formschlüssig mit den Anbindungsbereichen (6, 7) verbunden ist, insbesondere durch einen oder mehrere Hinterschnitte erzielt wird.

6. Fahrwerkbauteil nach Anspruch 7 oder 8,
**dadurch gekennzeichnet, dass**
die Schwachstelle nicht im Bereich des Formschlusses vorgesehen ist.

7. Fahrwerkbauteil nach einem der vorangehenden Ansprüche,
**dadurch gekennzeichnet, dass**
in dem Einsatz (8) ein oder mehrere durchgehende Löcher (10) vorgesehen sind, die von dem Kunststoff des zumindest einen aus Kunststoff bestehenden Anbindungsbereichs (6, 7) durchsetzt sind.

8. Fahrwerkbauteil nach einem der vorangehenden Ansprüche,
**dadurch gekennzeichnet, dass**
der Zwischenbereich (9) mechanisch nachgiebiger als die Anbindungsbereiche (6, 7) ausgebildet ist.

9. Fahrwerkbauteil nach einem der vorangehenden Anspruche,
**dadurch gekennzeichnet, dass**
bei einer mechanischen Überlastung des Strukturteils (4) eine plastische Verformung des Zwischenbereichs (9) früher als eine Verformung der Anbindungsbereiche (6, 7) eintritt.

10. Fahrwerkbauteil nach einem der vorangehenden Ansprüche,
**dadurch gekennzeichnet, dass**
der Einsatz (8) zwischen den Anbindungsstellen (2, 3) und im Abstand zu diesen angeordnet ist.

11. Fahrwerkbauteil nach einem der vorangehenden Ansprüche,
**dadurch gekennzeichnet, dass**
der Einsatz (8) durch ein offenes Hohlprofil gebildet ist.

12. Fahrwerkbauteil nach einem der vorangehenden Ansprüche,
**dadurch gekennzeichnet, dass**
der Einsatz (8) aus Metall besteht.

13. Fahrwerkbauteil nach einem der vorangehenden Ansprüche,
**dadurch gekennzeichnet, dass**
der Kunststoff mit Verstärkungsfasern versetzt ist und/oder ein Thermoplast oder ein Duroplast ist.

14. Fahrwerkbauteil nach einem der vorangehenden Ansprüche,
**dadurch gekennzeichnet, dass**
die Anbindungsstellen (2, 3) freie Enden der Anbindungsbereiche (6, 7) bilden, insbesondere die Anbindungsstellen (2, 3) materialhomogen mit den Anbindungsbereichen (6, 7) ausgebildet sind.

15. Fahrwerkbauteil nach einem der vorangehenden Ansprüche,
**gekennzeichnet durch**
eine Erfassungsvorrichtung (25), mittels welcher eine mechanische Überlastung des Strukturteils (4) erfassbar ist, insbesondere in den Kunststoff der Erfassungsvorrichtung (25) eingebettete Fasern umfasst, deren optische oder elektrische Eigenschaften sich bei einer mechanischen Überlastung des Strukturteils (4) ändern.

16. Fahrwerkbauteil nach Anspruch 15,
**dadurch gekennzeichnet, dass**
die Erfassungsvorrichtung (25) wenigstens eine elektrische Leitung (26) umfasst, die entlang des duktilen Einsatzes (8) geführt ist und/oder die elektrische Leitung (26) in den Kunststoff eingebettet ist.

17. Fahrwerkbauteil nach den Ansprüchen 15 und 16,
dadurch gekenntzeichnet, dass
die Erfassungsvorrichtung (25) die elektrische Kapazität zwischen den Teilen des mehrteiligen Einsatzes (8) erfasst oder diese Teile auf einen elektrischen Kontakt hin überwacht.

## Claims

1. Chassis component, with
at least two tie-up points (2, 3),
a structural part (4) which extends between the tie-up points (2, 3) and connects these rigidly to one another and which comprises at least one insert (8) made from a ductile material and at least two tie-up regions (6, 7) which carry or form the tie-up points (2, 3) and at least one of which consists of plastic,
**characterized in that**
the structural part (4) comprises at least one intermediate region (9) which connects the tie-up regions (6, 7) firmly to one another and has the insert (8) or is formed by the latter and which is designed to be more ductile than at least one of the tie-up regions (6, 7) and forms a locally limited weak point in respect of a mechanical overloading of the structural part (4).

2. Chassis component according to Claim 1,
**characterized in that**
mechanical overloading of the structural part (4) leads to plastic deformation of the intermediate region (9).

3. Chassis component according to Claim 1 or 2,
**characterized in that**,
in the event of mechanical overloading of the structural part (4), the tie-up regions (6, 7) are deformed elastically, in particular are deformed only elastically, until the position of the tie-up points (2, 3) in relation to one another has changed permanently by a stipulated amount on account of plastic deformation of the intermediate region (9).

4. Chassis component according to one of the preceding claims,
**characterized in that**
the insert (8) is injection-moulded around, at least at one of its ends, with the plastic of the at least one tie-up region (6, 7) consisting of plastic.

5. Chassis component according to one of the preceding claims,
**characterized in that**
the insert (8) is connected to the tie-up regions (6, 7) positively, and in particular is achieved by means of one or more undercuts.

6. Chassis component according to Claim 7 or 8,
**characterized in that**
the weak point is not provided in the region of the positive connection.

7. Chassis component according to one of the preceding claims,
**characterized in that**,
in the insert (8), one or more continuous holes (10) are provided, which are penetrated by the plastic of the at least one tie-up region (6, 7) consisting of plastic.

8. Chassis component according to one of the preceding claims,
**characterized in that**
the intermediate region (9) is designed to be mechanically more resilient than the tie-up regions (6, 7).

9. Chassis component according to one of the preceding claims,
**characterized in that**,
in the event of mechanical overloading of the structural part (4), plastic deformation of the intermediate region (9) occurs earlier than deformation of the tie-up regions (6, 7).

10. Chassis component according to one of the preceding claims,
**characterized in that**
the insert (8) is arranged between the tie-up points (2, 3) and at a distance from these.

11. Chassis component according to one of the preceding claims,
**characterized in that**
the insert (8) is formed by an open hollow profile.

12. Chassis component according to one of the preceding claims,
**characterized in that**
the insert (8) consists of metal.

13. Chassis component according to one of the preceding claims,
**characterized in that**
the plastic is compounded with reinforcing fibres and/or is a thermoplastic or a thermosetting plastic.

14. Chassis component according to one of the preceding claims,
**characterized in that**
the tie-up points (2, 3) form free ends of the tie-up regions (6, 7), and in particular the tie-up points (2, 3) are formed so as to be materially homogeneous with the tie-up regions (6, 7).

15. Chassis component according to one of the preceding claims
**characterized by**
a detection device (25), by means of which mechanical overloading of the structural part (4) can be detected, in particular comprises fibres which are embedded into the plastic of the detection device (25) and the optical or electrical properties of which change in the event of mechanical overloading of the structural part (4).

16. Chassis component according to Claim 15,
**characterized in that**
the detection device (25) comprises at least one electrical line (26) which is led along the ductile insert (8), and/or the electrical line (26) is embedded into the plastic.

17. Chassis component according to Claims 15 and 16,
**characterized in that**
the detection device (25) detects the capacitance between the parts of the multi-part insert (8) or monitors these parts for electrical contact.

## Revendications

1. Composant de train de roulement, comprenant :
au moins deux points de raccordement (2, 3),
une partie structurelle (4) s'étendant entre les points de raccordement (2, 3) et les reliant rigidement l'un à l'autre, laquelle comprend au moins un insert (8) en un matériau ductile et au moins deux régions de raccordement (6, 7) portant ou formant les points de raccordement (2, 3), dont au moins l'une est constituée de plastique,
**caractérisé en ce que**
la partie structurelle (4) comprend au moins une région intermédiaire (9) reliant fixement les régions de raccordement (6, 7) l'une à l'autre et présentant l'insert (8) ou étant formée par celui-ci, laquelle est réalisée de manière plus ductile qu'au moins l'une des régions de raccordement (6, 7) et forme, dans l'éventualité d'une surcharge mécanique de la partie structurelle (4), un point d'affaiblissement limité localement.

2. Composant de train de roulement selon la revendication 1,
**caractérisé en ce**
**qu'**une surcharge mécanique de la partie structurelle (4) entraîne une déformation plastique de la région intermédiaire (9).

3. Composant de train de roulement selon la revendication 1 ou 2,
**caractérisé en ce que**
les régions de raccordement (6, 7) se déforment élastiquement dans le cas d'une surcharge mécanique de la partie structurelle (4), en particulier se déforment élastiquement exclusivement jusqu'à ce que la position des points de raccordement (2, 3) l'un par rapport à l'autre, sous l'effet d'une déformation plastique de la région intermédiaire (9), se soit modifiée définitivement dans une mesure prédéfinie.

4. Composant de train de roulement selon l'une quelconque des revendications précédentes,
**caractérisé en ce que**
l'insert (8), au moins au niveau de l'une de ses extrémités, est surmoulé avec le plastique de l'au moins une région de raccordement (6, 7) constituée de plastique.

5. Composant de train de roulement selon l'une quelconque des revendications précédentes,
**caractérisé en ce que**
l'insert (8) est connecté par engagement par coopération de formes aux régions de raccordement (6, 7), notamment est obtenu par une ou plusieurs contre-dépouilles.

6. Composant de train de roulement selon la revendication 7 ou 8,
**caractérisé en ce que**
le point d'affaiblissement n'est pas prévu dans la région de l'engagement par coopération de formes.

7. Composant de train de roulement selon l'une quelconque des revendications précédentes,
**caractérisé en ce**
**qu'**un ou plusieurs orifices traversants (10) sont prévus dans l'insert (8), lesquels sont traversés par le plastique de l'au moins une région de raccordement (6, 7) constituée de plastique.

8. Composant de train de roulement selon l'une quelconque des revendications précédentes,
**caractérisé en ce que**
la région intermédiaire (9) est réalisée de manière plus souple mécaniquement que les régions de raccordement (6, 7).

9. Composant de train de roulement selon l'une quelconque des revendications précédentes,
**caractérisé en ce que**,
lors d'une surcharge mécanique de la partie structurelle (4), une déformation plastique de la région intermédiaire (9) s'amorce plus tôt qu'une déformation des régions de raccordement (6, 7).

10. Composant de train de roulement selon l'une quelconque des revendications précédentes,
**caractérisé en ce que**
l'insert (8) est disposé entre les points de raccordement (2, 3) et à distance de ceux-ci.

11. Composant de train de roulement selon l'une quelconque des revendications précédentes,
**caractérisé en ce que**
l'insert (8) est formé par un profilé creux ouvert.

12. Composant de train de roulement selon l'une quelconque des revendications précédentes,
**caractérisé en ce que**
l'insert (8) se compose de métal.

13. Composant de train de roulement selon l'une quelconque des revendications précédentes,
**caractérisé en ce que**
le plastique est chargé de fibres de renfort et/ou est une matière thermoplastique ou duroplastique.

14. Composant de train de roulement selon l'une quelconque des revendications précédentes,
**caractérisé en ce que**
les points de raccordement (2, 3) forment des extrémités libres des régions de raccordement (6, 7), en particulier les points de raccordement (2, 3) sont réalisés venus de matière avec les régions de raccordement (6, 7).

15. Composant de train de roulement selon l'une quelconque des revendications précédentes,
**caractérisé par**
un dispositif de détection (25) au moyen duquel une surcharge mécanique de la partie structurelle (4) peut être détectée, en particulier qui comprend des fibres noyées dans le plastique du dispositif de détection (25), dont les propriétés optiques ou électriques varient dans le cas d'une surcharge mécanique de la partie structurelle (4).

16. Composant de train de roulement selon la revendication 15,
**caractérisé en ce que**
le dispositif de détection (25) comprend au moins une ligne électrique (26) qui est guidée le long de l'insert ductile (8) et/ou la ligne électrique (26) est noyée dans le plastique.

17. Composant de train de roulement selon les revendications 15 et 16,
**caractérisé en ce que**
le dispositif de détection (25) détecte la capacité électrique entre les parties de l'insert (8) en plusieurs parties ou contrôle la présence d'un contact électrique entre ces parties.
